## Europäisches Patentamt

## European Patent Office

## Office européen des brevets

(11) Veröffentlichungsnummer: **0 238 678**
**B1**

(12)

# EUROPÄISCHE PATENTSCHRIFT

(45) Veröffentlichungstag der Patentschrift:
**19.09.90**

(51) Int. Cl.⁵: **G06F 7/50**

(21) Anmeldenummer: **86103947.7**

(22) Anmeldetag: **22.03.86**

(54) CMOS-Volladdierstufe.

(43) Veröffentlichungstag der Anmeldung:
**30.09.87 Patentblatt 87/40**

(45) Bekanntmachung des Hinweises auf die Patenterteilung:
**19.09.90 Patentblatt 90/38**

(84) Benannte Vertragsstaaten:
**DE FR NL**

(56) Entgegenhaltungen:
EP-A- 0 122 946
EP-A- 0 143 456

(73) Patentinhaber: **Deutsche ITT Industries GmbH,
Hans-Bunte-Strasse 19 Postfach 840,
D-7800 Freiburg(DE)**

(72) Erfinder: **Lee, Peter B. Sc., Heidenhofstrasse 1,
D-7800 Freiburg i. Br.(DE)**
Erfinder: **Theus, Ulrich, Dr., Schönbergstrasse 5b,
D-7803 Gundelfingen(DE)**

ACTORUM AG

## Beschreibung

Die Erfindung betrifft eine CMOS-Volladdierstufe mit den Merkmalen des Oberbegriffs des Anspruchs 1. Diese Merkmale sind bei einer in der veröffentlichten Patentanmeldung EP-A-122 946, insbesondere Fig. 5, beschriebenen CMOS-Volladdierstufe vorhanden.

Beim Einsatz der vorbeschriebenen Volladdierstufe sowie deren Variante nach Fig. 6 der EP-A-122 946 in monolithisch integrierten Paralleladdierern hat sich gezeigt, daß die maximal mögliche Verarbeitungsgeschwindigkeit dadurch begrenzt wird, daß in jeder Stufe das Übertrag-Eingangssignal auch Transistoren zugeführt ist, die zur Summenbildung beitragen, wodurch der Übertragsignalweg unter anderem auch zusätzlich kapazitiv belastet ist.

Die in den Ansprüchen gekennzeichnete Erfindung löst die Aufgabe, die vorbeschriebene CMOS-Volladdierstufe so abzuändern, daß die erwähnte Belastung des Übertragsignalwegs wesentlich vermindert ist, so daß die Anordnung auch bei höheren Frequenzen noch arbeitet als die vorbeschriebene. Obwohl die CMOS-Volladdierstufe nach der Erfindung vier Transistoren mehr aufweist als die vorbeschriebene Anordnung und somit 20 anstatt 16 Transistoren hat, wird die dadurch bedingte geringfügige Flächenvergrößerung der CMOS-Volladdierstufe in Kauf genommen.

Die Erfindung wird nun anhand der Figuren der Zeichnung näher erläutert.

Fig. 1 zeigt das Schaltbild der Volladdierstufe nach der Erfindung, und

Fig. 2 zeigt das Schaltbild einer Abwandlung der Anordnung nach Fig. 1 für ein invertiertes Übertrag-Eingangs-signal bei zu erzeugendem nichtinvertiertem Übertrag-Ausgangssignal.

Fig. 3 zeigt das Schaltbild einer Weiterbildung der Anordnung nach Fig. 1 und

Fig. 4 zeigt das Schaltbild einer Weiterbildung der Abwandlung nach Fig. 2.

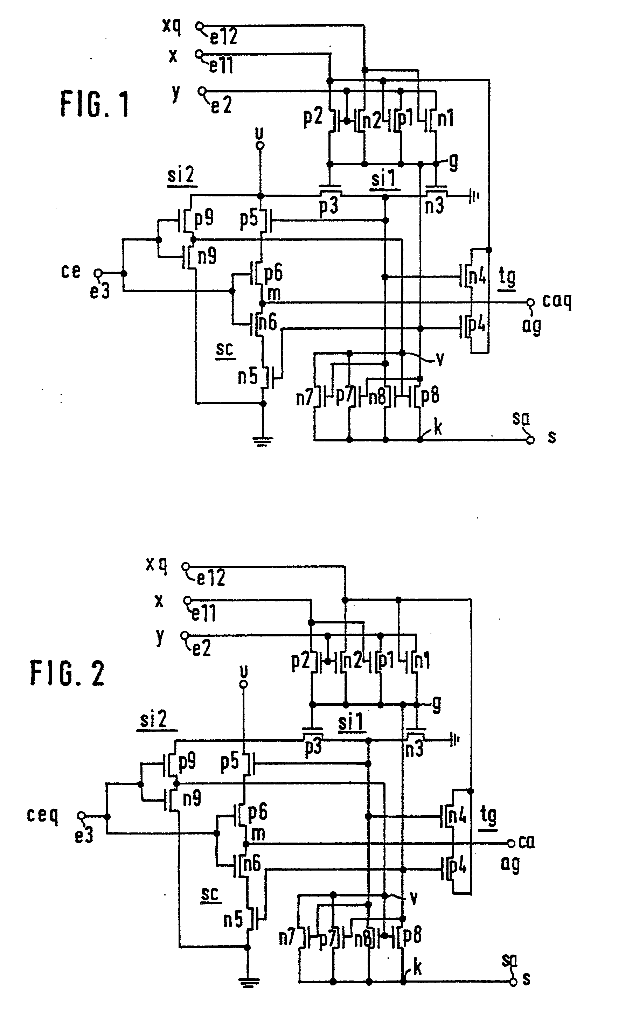

Im Schaltbild der Fig. 1 sind die 16 Transistoren $p1$, $n1$ .... $p8$, $n8$ diejenigen, die auch bei der vorbeschriebenen Anordnung vorhanden sind. Die Verknüpfung dieser 16 Transistoren untereinander ist bei der vorbeschriebenen Anordnung geringfügig anders als bei der Erfindung, insbesondere ist die Serienschaltung sc mit den Transistoren $p5$, $n5$, $p6$, $n6$ hinsichtlich der Bildung ihres Eingangs konträr. Während bei der vorbeschriebenen Anordnung nämlich die gemeinsame Gate-Verbindung der Transistoren $n5$, $p5$ den Eingang bildet, wird dies bei der Erfindung durch die gemeinsame Gateverbindung der Transistorn $p6$, $n6$ erreicht. Demzufolge sind auch die Gates der beiden anderen Transistoren $p5$, $n5$ bei der Erfindung mit den Gates der Transmission-Gate-Transistoren $n4$, $p4$ verbunden.

Auch ist dem Eingang des Transmission-Gates tg gegenüber der vorbeschriebenen Anordnung ein anderes Eingangssignal zugeführt.

Im einzelnen ist in Fig. 1 das Gate des ersten P-Transistors $p1$ mit dem ersten Teileingang $e11$ für das nichtinvertierte erste Addiersignal $x$ verbunden Das Gate des ersten N-Transistors $n1$ liegt am zweiten Teileingang $e12$ für das invertierte erste Addiersignal $xq$.

Der eine Pol der Source-Drain-Strecke des zweiten N-Transistors $n2$ liegt am zweiten Teileingang $e12$. Der eine Pol der Source-Drain-Strecke des zweiten P-Transistors $p2$ liegt am ersten Teileingang $e11$.

Die Gates der Transistoren $p2$, $n2$ und jeweils der eine Pol der Source-Drain-Strecke der Transistoren $p1$, $n1$ liegen gemeinsam am zweiten Eingang $e2$, während die anderen Pole dieser vier Transistoren $p1$, $n1$, $p2$, $n2$ zum Gesamtverbindungspunkt g zusammengeführt sind.

Der aus der zwischen der Betriebsspannungsquelle u und dem Schaltungsnullpunkt liegenden Serienschaltung der Source-Drain-Strecken des dritten P-Transistors $p3$ und des dritten N-Transistors $n3$ gebildete erste statische Inverter sil liegt mit seinem Eingang am Gesamtverbindungspunkt g. Der Eingang des aus dem vierten N-Transistor $n4$ und dem vierten P-Transistor $p4$ durch Parallelschalten ihrer Source-Drain-Strecken in üblicher Weise gebildeten Transmission-Gates tg liegt am ersten Teileingang $e11$, während sein Ausgang der Ausgang ag für das invertierte Übertrag-Ausgangssignal caq ist. Das Gate des vierten P-Transistors $p4$ liegt am Gesamtverbindungspunkt g und somit am Eingang des ersten statischen Inverters sil und das Gate des vierten N-Transistors $n4$ am Ausgang dieses Inverters.

Wie bereits erwähnt besteht die Serienschaltung sc aus den in dieser Reihenfolge zwischen der Betriebsspannungsquelle u und dem Schaltungsnullpunkt in Serie geschalteten Source-Drain-Strecken des fünften P-Transistors $p5$, des sechsten P-Transistors $p6$, des sechsten N-Transistors $n6$ und des fünften N-Transistors $n5$. Die miteinander verbundenen Gates der Transistors $n6$, $p6$ bilden den Eingang dieses Inverters und liegen am dritten Eingang $e3$, während der Mittelpunkt m dieser Serienschaltung am Ausgang des Transmission-Gates tg und somit auch am Ausgang ag liegt. Das Gate des fünften N-Transistors $n5$ ist mit dem Gesamtverbindungspunkt g und somit mit dem Gate des vierten P-Transistors $p4$ verbunden. Das Gate des fünften P-Transistors $p5$ liegt am Ausgang des ersten statischen Inverters si1 und somit auch am Gate des vierten N-Transistors $n4$. Bei der Erfindung sind die innen liegenden Transistoren $p6$, $n6$ die Eingangstransistoren, während dies bei der vorbeschriebenen Anordnung genau umgekehrt ist.

Das Gate des siebten P-Transistors $p7$ liegt zusammen mit dem einen Pol der Source-Drain-Strecke des achten P-Transistors $p8$ am Gesamtverbindungspunkt g. Das Gate des siebten N-Transistors $n7$ liegt zusammen mit dem einen Pol der Source-Drain-Strecke des achten N-Transistors $n8$ am Ausgang des ersten statischen Inverters si1. Das Gate des achten N-Transistors $n8$ und das des achten P-Transistors $p8$ liegt zusammen mit dem einen Pol der jeweiligen Source-Drain-Strecke des siebten N-Transistors $n7$ und des siebten P-Transistors $p7$ am Verbindungsknoten v. Die vier anderen Pole der Source-Drain-Strecken der Transistoren p7, n7, p8, n8 bilden den Gesamtverbindungsknoten k, der der Summenausgang sa für das Signal s der Volladdierstufe ist.

Schließlich ist der zweite statische Inverter si2 aus der Serienschaltung der Source-Drain-Strecken des neunten P-Transistors p9 und des neunten N-Transistors n9 vorgesehen; die zwischen der Betriebsspannungsquelle u und dem Schaltungsnullpunkt liegt, wobei die Gates der beiden Transistoren p9, n9 mit dem dritten Eingang e3 verbunden sind und deren gemeinsamer Source-Drain-Verbindungspunkt als der Ausgang dieses Inverters am Verbindungsknoten v angeschlossen ist (bei der vorbeschriebenen Anordnung liegt dieser am dritten Eingang e3, was u.a. den eingangs geschilderten Nachteil bedingt).

Die Fig. 2 zeigt das Schaltbild einer Abwandlung der Anordnung nach Fig. 1 für ein an den dritten Eingang e3 anzulegendes invertiertes Übertrag-Eingangssignal ceq bei am Übertragausgang ag abzugebendem nichtinvertiertem Übertrag-Ausgangssignal ca. Eine derartige Stufe ist er forderlich, wenn mit den Anordnungen der Fig. 1 und 2 ein CMOS-Paralleladdierer gebildet werden soll.

Gegenüber der Anordnung nach Fig. 1 ist bei der von Fig. 2 der Eingang des Transmissiongates tg am zweiten Teileingang e12 angeschlossen. (Bei der vorbeschriebenen Anordnung liegt dieser Eingang am zweiten Eingang).

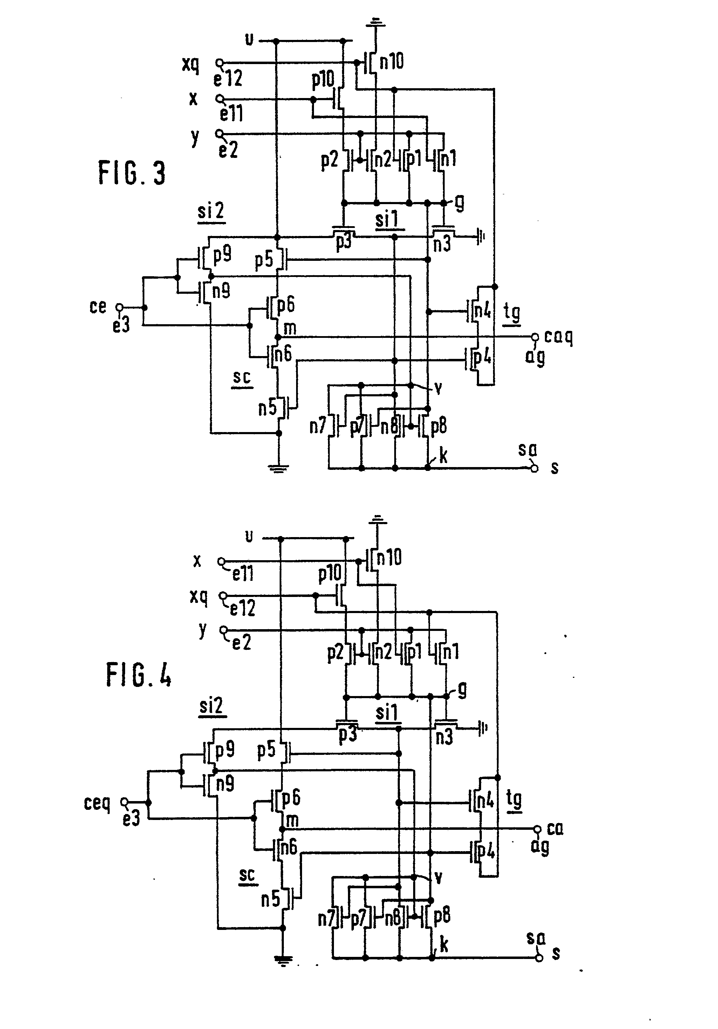

Bei der Weiterbildung nach Fig. 3 sind die beiden Transistoren p10, n10 vorgesehen, über die das nichtinvertierte erste Addiersignal x und das invertierte erste Addiersignal xq an die Transistoren n2, p2 gelangt.

Der eine Pol der Source-Drain-Strecke des zweiten N-Transistors n2 liegt über die Source-Drain-Strecke des zehnten N-Transistors n10 am Schaltungsnullpunkt, dessen Gate am zweiten Teileingang e12 angeschlossen ist. Der eine Pol der Source-Drain-Strecke des zweiten P-Transistors p2 liegt über die Source-Drain-Strecke des zehnten P-Transistors p10 an der Betriebsspannungsquelle u, dessen Gate am ersten Teileingang e11 angeschlossen ist.

Der Eingang des Transmission-Gates tg liegt be der Weiterbildung nach Fig. 3 am zweiten Teileingang e12. Das Gate des vierten n-Transistors n4 liegt am Gesamtverbidungspunkt g und somit am Eingang des ersten statischen Inverters si1 und das Gate des vierten p-Transistors p4 am Ausgang dieses Inverters.

Das Gate des fünften P-Transistors p5 ist mit dem Gesamtverbindungspunkt g und somit mit dem Gate des vierten N-Transistors n4 verbunden. Das Gate des fünften N-Transistors n5 liegt am Ausgang des ersten statischen Inverters si1 und somit auch am Gate des vierten P-Transistors p4.

Das Schaltbild der Fig. 4 zeigt schließlich eine Weiterbildung der Abwandluung nach Fig. 2.

Das Gate des zehnten N-Transistors n10 liegt am ersten Teileingang e11 und das des zehnten P-Transistors p10 am zweiten Teilausgang e12. Der Eingang des Transmission-Gates tg liegt am ersten Teileingang e11. Das Gate des vierten P-Transistors p4 liegt zusammen mit dem Gate des fünften N-Transistors n5 am Gesamtverbindungspunkt g und somit am Eingang der ersten statischen Inverters si1 und das Gate des vierten N-Transistors n4 zusammen mit dem Gate des fünften P-Transistors p5 am Ausgang dieses Inverters.

Durch eine Rechnersimulation von CMOS-Volladdierstufen nach den Fig. 3 und 4 wurde ermittelt, daß ein 16-stufiger Paralleladdierer ohne Pipelining eine obere Arbeitsgrenzfrequenz von etwa 30 MHz hat.

**Patentansprüche**

1. CMOS-Volladdierstufe mit
- einem ersten Teileingang (e11) für das nichtinvertierte erste Addiersignal (x),
- einem zugehörigen zweiten Teileingang (e12) für das invertierte erste Addiersignal (xq),
- einem zweiten Eingang (e2) für ein zweites Addiersignal (y) in nichtinvertierter Form,
- einem dritten Eingang (e3) für ein nichtinvertiertes Übertrag-Eingangssignal (ce),
- einem ersten P-Transistor (p1), dessen Gate am ersten Teileingang (e11) und von dem der eine Pol seiner Source-Drain-Strecke am zweiten Eingang (e2) liegen,
- einem ersten N-Transistor (n1), dessen Gate am zweiten Teileingang (e12) und von dem der eine Pol seiner Source-Drain-Strecke am zweiten Eingang (e2) liegen,
- einem zweiten N-Transistor (n2), dessen Gate am zweiten Eingang (e2) und von dem der eine Pol seiner Source-Drain-Strecke am zweiten Teileingang (e12) angeschlossen ist,
- einem zweiten P-Transistor (p2), dessen Gate am zweiten Eingang (e2) und von dem der eine Pol seiner Source-Drain-Strecke am ersten Teileingang (e11) liegt,
- einem Gesamtverbindungspunkt (g) der anderen Pole der Source-Drain-Strecke der ersten und zweiten P- und N-Transistoren (p1, p2, n1, n2),
- einem ersten statischen Inverter (si1) aus der zwischen einer Betriebsspannungsquelle (u) und dem Schaltungsnullpunkt liegenden Serienschaltung der Source-Drain-Strecken eines dritten P-Transistors (p3) und eines dritten N-Transistors (n3), deren Gates am Gesamtverbindungspunkt (g) angeschlossen sind und dessen Ausgang am Mittelpunkt der Serienschaltung liegt,
- einem Transmission-Gate (tg) aus einem vierten N-Transistor (n4) und einem vierten P-Transistor (p4), von denen das Gate des P-Transistors mit dem Eingang und das Gate des N-Transistors mit dem Ausgang des ersten statischen Inverters (si1) verbunden ist, wobei der Ausgang des Transmission-Gates der Ausgang (ag) für das invertierte Übertrag-Ausgangssignal (caq) ist und dessen Eingang eines der Eingangssignale (x, xq, y) zugeführt ist,
- einer zwischen der Betriebsspannungsquelle (u) und dem Schaltungsnullpunkt in dieser Reihenfolge liegenden Serienschaltung (sc) der Source-Drain-Strecken eines fünften P-Transistors (p5), eines sechsten P-Transistors (p6), eines sechsten N-Transistors (n6) und eines fünften N-Transistors (n5), wobei
-- der Mittelpunkt (m) der Serienschaltung am Ausgang des Transmission-Gates (tg) liegt,
-- die Gates der einen beiden symmetrisch zum Mittelpunkt (m) liegenden Transistoren miteinander verbunden am dritten Eingang (e3) angeschlossen sind und
-- jeweils das Gate eines der anderen beiden symmetrisch zum Mittelpunkt (m) liegenden Transistoren am Gesamtverbindungspunkt (g) bzw. am Ausgang des statischen Inverters (si) liegt,
- einem siebten P-Transistor (p7), dessen Gate am Gesamtverbindungspunkt (g) liegt,
- einem siebten N-Transistor (n7), dessen Gate am Ausgang des ersten statischen Inverters (si1) liegt,
- einem achten N-Transistor (n8), von dem der eine Pol seiner Source-Drain-Strecke am Ausgang des ersten statischen Inverters (si1) angeschlossen ist,
- einem achten P-Transistor (p8), von dem der eine Pol seiner Source-Drain-Strecke am Gesamtverbindungspunkt (g) liegt,
- einem Verbindungsknoten (v), an dem jeweils der eine Pol der Source-Drain-Strecke der siebten P- und N-Transistoren (p7, n7) sowie die Gates der achten P- und N-Transistoren (p8, n8) liegen, und
- einem Gesamtverbindungsknoten (k) der anderen Pole der Source-Drain-Strecken der siebten und achten P- und N-Transistoren (p7, p8, n7, n8), der der Ausgang (sa) für das nichtinvertierte Summensignal (s) ist,
gekennzeichnet durch folgende Merkmale:
- ein zweiter statischer Inverter (si2) aus der Serienschaltung der Source-Drain-Strecke eines neunten P-Transistors (p9) und eines neunten N-Transistors (n9) liegt zwischen der Betriebsspannungsquelle (u) und dem Schaltungsnullpunkt,
- der Eingang des zweiten statischen Inverters (si2) liegt am dritten Eingang (e3) und sein Ausgang am Verbindungsknoten (v),
- der Eingang des Transmission-Gates (tg) liegt am ersten Teileingang (e11),
- das Gate des fünften N-Transistors (n5) liegt am Gesamtverbindungspunkt (g),
- das Gate des fünften P-Transistors (p5) liegt am Ausgang des ersten statischen Inverters (si1), und
- die Gates des sechsten P- und des sechsten N-Transistors (p6, n6) liegen am dritten Eingang (e3).

2. Abwandlung der CMOS-Volladdierstufe nach Anspruch 1 für ein invertiertes Übertrag-Eingangssignal (ceq) und ein abzugebendes nichtinvertiertes Übertrag-Ausgangssignal (ca), dadurch gekennzeichnet, daß der Eingang des Transmission-Gates (tg) am zweiten Teileingang (e12) liegt.

3. CMOS-Volladdierstufe nach Anspruch 1, gekennzeichnet durch folgende Merkmale:
- die Source-Drain-Strecke eines zehnten P-Transistors (p10) liegt zwischen der Betriebsspannungsquelle (u) und dem einen Pol der Source-Drain-Strecke des zweiten P-Transistors (p2) und das Gate des zehnten P-Transistors (p10) am ersten Teileingang (e11),
- die Source-Drain-Strecke eines zehnten N-Transistors (n10) liegt zwischen dem Schaltungsnullpunkt und dem einen Pol der Source-Drain-Strecke des zweiten N-Transistors (n2) und das Gate des zehnten N-Transistors (n10) am zweiten Teileingang (e12),
- das Gate des ersten N-Transistors (n1) liegt am ersten Teileingang (e11),
- das Gate des ersten P-Transistors (p1) liegt am zweiten Teileingang (e12),
- das Gate des vierten N-Transistors (n4) und das des fünften P-Transistors (p5) liegen am Gesamtverbindungspunkt (g), und
- das Gate des vierten P-Transistors (p4) und das des fünften N-Transistors (n5) liegen am Ausgang des ersten statischen Inverters (si1).

4. CMOS-Volladdierstufe nach Anspruch 1 für ein invertiertes Übertrags-Eingangssignal (ceq) und ein abzugebendes nichtinvertiertes Übertrag-Ausgangssignal (ca), gekennzeichnet durch folgende Merkmale:
- die Source-Drain-Strecke eines zehnten P-Transistors (p10) liegt zwischen der Betriebsspannungsquelle (u) und dem einen Pol der Source-Drain-Strecke des zweiten P-Transistors (p2) und das Gate des zehnten P-Transistors (p10) am zweiten Teileingang (e12),
- die Source-Drain-Strecke eines zehnten N-Transistors (n10) liegt zwischen dem Schaltungsnullpunkt und dem einen Pol der Source-Drain-Strecke des zweiten N-Transistors (n2) und das Gate des zehnten N-Transistors (n10) am ersten Teileingang (e11),
- das Gate des ersten N-Transistors (n1) liegt am zweiten Teileingang (e12),
- das Gate des ersten P-Transistors (p1) liegt am ersten Teileingang (e11),
- der Eingang des Transmissiongates (tg) liegt am zweiten Teileingang (e12),
- das Gate des vierten N-Transistors (n4) und das des fünften P-Transistors (p5) liegen am Ausgang des ersten statischen Invertes (si1), und
- das Gate des vierten P-Transistors (p4) und das des fünften N-Transistors (n5) liegen am Gesamtverbindungspunkt (g).

5. CMOS-Parallel-Addierer mit bezüglich der Übertragsbildung abwechselnd in Reihe geschalteten CMOS-Volladdierstufen nach Anspruch 1 und 2 oder 3 und 4 oder 1 und 4.

**Claims**

1. CMOS full-adder stage comprising
— a first subinput (e11) for the uninverted first signal to be added (x),
— an associated second subinput (e12) for the inverted first signal to be added (xq),
— a second input (e2) for an uninverted second signal to be added (y),
— a third input (e3) for an uninverted carry input signal (ce),
— a first P-type transistor (p1) having its gate connected to the first subinput (e11), and one terminal of its source-drain path to the second input (e2),
— a first N-type transistor (n1) having its gate connected to the second subinput (e12), and one terminal of its source-drain path to the second input (e2),
— a second N-type transistor (n2) having its gate connected to the second input (e2), and one terminal of its source-drain path to the second subinput (e12),
— a second P-type transistor (p2) having its gate connected to the second input (e2), and one terminal of its source-drain path to the first subinput (e11),
— a common junction point (g) of the other terminals of the source-drain paths of the first and second P- and N-type transistors (p1, p2, n1, n2),
— a first static inverter (si1) formed by the series combination of the source-drain paths of a third P-type transistor (p3) and a third N-type transistor (n3) having their gates connected to the common junction point (g), said series combination being interposed between a supply voltage source (u) and ground, and the output of said first static inverter is connected to the center point of this series combination,
— a transmission gate (tg) consisting of a fourth N-type transistor (n4) and a fourth P-type transistor (p4) having their gates connected, respectively, to the output and the input of the first static inverter (si1), the output of the transmission gate being the output (ag) for the inverted carry signal (caq), and the input of the transmission gate being presented with one of the input signals (x, xq, y),
— a series combination (sc) of the source-drain paths of a fifth P-type transistor (p5), a sixth P-type transistor (p6), a sixth N-type transistor (n6), and a fifth N-type transistor (n5), said source-drain paths being arranged in this order between the supply-voltage source (u) and ground, with

    — the center point (m) of the series combination connected to the output of the transmission gate (tg),

    — the gates of one of the two pairs of transistors which are symmetrical with respect to the center point (m) being connected together, and the point of connection being connected to the third input (e3), and

    — the gates of the other pair of transistors connected to the common junction point (g) and to the output of the static inverter (si), respectively,

— a seventh p-type transistor (p7) having its gate connected to the common junction point (g),
— a seventh N-type transistor (n7) having its gate connected to the output of the first static inverter (si1),
— an eighth N-type transistor (n8) having one terminal of its source-drain path connected to the output of the first static inverter (si1),
— an eighth P-type transistor (p8) having one terminal of its source-drain path connected to the common junction point (g),
— a node (v) having one terminal of the source-drain path of the seventh P-type transistor (p7), one terminal of the source-drain path of the seventh N-type transistor (n7), and the gates of the eighth P- and N-type transistors (p8, n8) connected thereto, and
— a common node (k) of the other terminals of the source-drain paths of the seventh and eighth P- and N-type transistors (p7, p8, n7, n8), which is the output (sa) for the uninverted sum signal (s), characterized by the following features:
— A second static inverter (si2) formed by the series combination of the source-drain paths of a ninth P-type transistor (p9) and a ninth N-type transistor (n9) is interposed between the supply-voltage source (u) and ground;
— the input of the second static inverter (si2) is connected to the third input (e3), and the output to the node (v);
— the input of the transmission gate (tg) is connected to the first subinput (e11);
— the gate of the fifth N-type transistor (n5) is connected to the common junction point (g);
— the gate of the fifth P-type transistor (p5) is connected to the output of the first static inverter (si1), and
— the gates of the sixth P- and N-type transistors (p6, n6) are connected to the third input (e3).

2. Variant of the CMOS full-adder stage claimed in claim 1 for an inverted carry input signal (ceq) and a carry output signal (ca) to be delivered in uninverted form, characterized in that the input of the transmission gate (tg) is connected to the second subinput (e12).

3. A CMOS full-adder stage as claimed in claim 1, characterized by the following features:
— The source-drain path of a tenth P-type transistor (p10) is interposed between the supply-voltage source (u) and one terminal of the source-drain path of the second P-type transistor (p2), and the gate of the tenth P-type transistor (p10) is connected to the first subinput (e11);
— the source-drain path of a tenth N-type transistor (n10) is connected between ground and one terminal of the source-drain path of the second N-type transistor (n2), and the gate of the tenth N-type transistor (n10) is connected to the second subinput (e12);
— the gate of the first N-type transistor (n1) is connected to the first subinput (e11);
— the gate of the first P-type transistor (p1) is connected to the second subinput (e12);
— the gate of the fourth N-type transistor (n4) and that of the fifth P-type transistor (p5) are connected to the common junction point (g) and
— the gate of the fourth P-type transistor (p4) and that of the fifth N-type transistor (n5) are connected to the output of the first static inverter (si1).

4. A CMOS full-adder stage as claimed in claim 1, for an inverted carry input signal (ceq) and a carry output signal (ca) to be delivered in uninverted form, characterized by the following features:
— The source-drain path of a tenth P-type transistor (p10) is connected between the supply-voltage source (u) and one terminal of the source-drain path of the second P-type transistor (p2), and the gate of the tenth P-type transistor (p10) is connected to the second subinput (e12);

— the source-drain path of a tenth N-type transistor (n10) is connected between ground and one terminal of the source-drain path of the second N-type transistor (n2), and the gate of the tenth N-type transistor (n10) is connected to the first subinput (e11);
— the gate of the first N-type transistor (n1) is connected to the second subinput (e12);
— the gate of the first P-type transistor (p1) is connected to the first subinput (e11);
— the input of the transmission gate (tg) is connected to the second subinput (e12);
— the gate of the fourth N-type transistor (n4) and that of the fifth P-type transistor (p5) are connected to the output of the first static inverter (si1), and
— the gate of the fourth P-type transistor (p4) and that of the fifth N-type transistor (n5) are connected to the common junction point (g).

5. CMOS parallel-adder with CMOS full-adder stages as claimed in claims 1 and 2 or 3 and 4 or 1 and 4 which are alternately connected in series with respect to the carry generation.

**Revendications**

1. Additionneur complet CMOS comportant
- une première entrée partielle (e11) pour le premier signal d'addition non inversé (x),
- une seconde entrée partielle associée (e12) pour le premier signal d'addition inversé (xq),
- une seconde entrée (e2) pour un second signal d'addition (y) sous forme non inversée,
- une troisième entrée (e3) pour un signal d'entrée de report non inversé (ce),
- un premier transistor de type P (p1), dont la grille est raccordée à la première entrée partielle (e11) et dont un premier pôle de la voie source-drain est raccordé à la seconde entrée (e2),
- un premier transistor de type N (n1), dont la grille est raccordée à la seconde entrée partielle (e12) et dont un premier pôle de la voie source-drain est raccordé à la seconde entrée (e2),
- un second transistor de type N (n2), dont la grille est raccordée à la seconde entrée (e2) et dont le premier pôle de la voie source-drain est raccordé à la seconde entrée partielle (e12),
- un second transistor de type P (p2), dont la grille est raccordée à la seconde entrée (e2) et dont le premier pôle de la voie source-drain est raccordé à la première entrée partielle (e11),
- un point de jonction commun (g) des autres pôles des voies source-drain des premiers et seconds transistors de type P et N (p1, p2, n1, n2),
- un premier inverseur statique (si1) formé par le circuit série, qui est situé entre une source de tension de service (u) et le neutre du circuit et est formé par les voies source-drain d'un troisième transistor de type P (p3) et d'un troisième transistor de type N (n3), dont les grilles sont raccordées au point de jonction commun (g) et dont la sortie est raccordée au centre du circuit série,
- une porte de transmission (tg) formée par un quatrième transistor de type N (n4) et par un quatrième transistor de type P (p4), la grille du transistor de type P étant reliée à l'entrée et la grille du transistor de type N à la sortie du premier inverseur statique (si1), et la sortie de la porte de transmission constituant la sortie (tg) pour le signal inversé de sortie de report (caq), tandis que l'un des signaux d'entrée (x, xq, y) est envoyé à l'entrée de la grille,
- un circuit série (sc), qui est situé entre la source de tension de service (u) et le neutre du circuit dans cet ordre et est formé par les voies source-drain d'un cinquième transistor de type P (p5), d'un sixième transistor de type P (p6), d'un sixième transistor de type N (n6) et d'un cinquième transistor de type N (n5),
  — le centre (m) du circuit série étant raccordé à la sortie de la porte de transmission (tg),
  — les grilles de deux premiers des deux transistors montés symétriquement par rapport au centre (m) étant reliés entre elles et à la troisième entrée (e3), et
  — respectivement la grille de l'un des deux autres transistors branchés symétriquement par rapport au centre (m) étant situé au niveau du point de jonction commun (g) ou à la sortie de l'inverseur statique (si),
- un septième transistor de type P (p7), dont la grille est raccordée au point de jonction commun (g),
- un septième transistor de type N (n7), dont la grille est raccordée à la sortie du premier inverseur statique (si1),
- un huitième transistor de type N (n8), dont un pôle de la voie source-drain est raccordé à la sortie du premier inverseur statique (si1),
- un huitième transistor de type P (p8), dont un pôle de la voie source-drain est raccordé au point de jonction commun (g),
- un nœud de jonction (v), auquel sont raccordés respectivement le premier pôle de la voie source-drain des septièmes transistors de type P et N (p7, n7) ainsi que les grilles des huitièmes transistors de type P et N (p8, n8), et
- un nœud de jonction commun (k) des autres pôles des voies source-drain des septièmes et huitièmes transistors de type P et N (p7, p8, n7, n8), qui constitue la sortie (sa) pour le signal somme non inversé (s), caractérisé par les caractéristiques suivantes :
- un second inverseur statique (si2) formé par le montage série de la voie source-drain d'un neuvième transistor de type P (p9) et d'un neuvième transistor de type N (n9) et branché entre la source de tension de service (u) et le point neutre du circuit,
- la sortie du second inverseur statique (si2) est raccordée à la troisième entrée (e3) et sa sortie est raccordée au nœud de jonction (v),
- l'entrée de la porte de transmission (tg) est raccordée à la première entrée partielle (e11),
- la grille du cinquième transistor de type N (n5) est raccordée au point de jonction commun (g),
- la grille du cinquième transistor de type P (p5) est raccordée à la sortie du premier inverseur statique (si1), et

- les grilles du sixième transistor de type P et du sixième transistor de type N (p6, n6) sont raccordées à la troisième entrée (e3).

2. Variante de l'étage additionneur complet CMOS selon la revendication 1 pour un signal d'entrée de report inversé (ceq) et pour un signal de sortie de report non inversé (ca), devant être délivré, caractérisée en ce que l'entrée de la porte de transmission (tg) est raccordée à la seconde entrée partielle (e11).

3. Etage additionneur complet CMOS selon la revendication 1, caractérisé par les caractéristiques suivantes:

- la voie source-drain d'un dixième transistor de type P (p10) est branchée entre la source de tension de service (u) et le premier pôle de la voie source-drain du second transistor de type P (p2) et la grille du dixième transistor de type P (p10) est raccordée à la première entrée partielle (e11),

- la voie source-drain d'un dixième transistor de type N (n10) est branchée entre le neutre du circuit et le premier pôle de la voie source-drain du deuxième transistor de type N (n2), et la grille du dixième transistor de type N (n10) est raccordée à la seconde entrée partielle (e12),

- la grille du premier transistor de type N (n1) est raccordée à la première entrée partielle (e11),

- la grille du premier transistor de type P (p1) est raccordée à la seconde entrée partielle (e12),

- la grille du quatrième transistor de type N (n4) et celle du cinquième transistor de type P (p5) sont raccordées au point de jonction commun (g), et

- la grille du quatrième transistor de type P (p4) et celle du cinquième transistor de type N (n5) sont raccordées à la sortie du premier inverseur statique (si1).

4. Etage additionneur complet selon la revendication 1 pour un signal d'entrée de report inversé (ceq) et un signal de sortie de report non inversé (ca) devant être délivré, caractérisé par les caractéristiques suivantes :

- la voie source-drain d'un dixième transistor de type P (p10) est branchée entre la source de tension de service (u) et le premier pôle de la voie source-drain du second transistor de type P (p2), et la grille du dixième transistor de type P (p10) est raccordée à la seconde entrée partielle (e12),

- la voie source-drain d'un dixième transistor de type N (n10) est branchée entre le point neutre du circuit et le premier pôle de la voie source-drain du second transistor de type N (n2), et la grille du dixième transistor de type N (n10) est raccordée à la première entrée partielle (e11),

- la grille du premier transistor de type N (n1) est raccordée à la seconde entrée partielle (e12),

- la grille du premier transistor de type P (p1) est raccordée à la première entrée partielle (e11),

- l'entrée de la porte de transmission (tg) est raccordée à la seconde entrée partielle (e12),

- la grille du quatrième transistor de type N (n4) et celle du cinquième transistor de type P (p5) sont raccordées à la sortie du premier inverseur statique (si1), et

- la grille du quatrième transistor de type P (p4) et celle du cinquième transistor de type N (n5) sont raccordées au point de jonction commun (g).

5. Additionneur parallèle CMOS comportant des étages additionneurs complets CMOS branchés en série en alternance en rapport avec la formation des reports, selon les revendications 1 et 2 ou 3 et 4 ou 1 et 4.

FIG. 1

FIG. 2

EP 0 238 678 B1

FIG. 3

FIG. 4